# EUROPEAN PATENT SPECIFICATION

(11) **EP 2 514 635 B1**
(45) Date of publication and mention of the grant of the patent: **23.10.2013**
(21) Application number: 12162939.8
(22) Date of filing: 03.04.2012
(51) Int. Cl.: B60Q 1/068, B62J 6/02, B62J 17/02

(54) **Cover Structure for Motorcycle Headlamp**
Abdeckstruktur für Motorradscheinwerfer
Structure de couvercle de phare avant de motocyclette

(30) Priority: 20.04.2011 TW 100206913 U
(43) Date of publication of application: 24.10.2012
(73) Proprietor: Kwang Yang Motor Co., Ltd., Kaohsiung City (TW)
(72) Inventor: Lin, Tsang-Mao, Kaohsiung City (TW); Liao, Teng-Fa, Kaohsiung City (TW)
(74) Representative: Karakatsanis, Georgios

(56) References cited:
- JP-A- 5 170 155
- JP-A- 8 268 360
- JP-A- 8 310 465
- JP-A- 62 283 028
- US-A1- 2009 021 038

## Description

### FIELD OF THE INVENTION

The present invention relates to a cover structure for a headlamp of a motorcycle, more particularly to a cover structure including a face panel laid over the headlamp and formed with at least one adjustment hole corresponding in position to an adjustment mechanism, and a decorative panel laid over the face panel for covering the adjustment hole, so as to ensure stylized integrity of the motorcycle and efficiency of adjusting lighting angle of the headlamp.

### BACKGROUND OF THE INVENTION

Smaller than automobiles and easy to maneuver, motorcycles are the vehicles of choice for many and a popular form of transportation in today's world. Moreover, given the soaring price of gasoline, motorcycles, which consume much less fuel than automobiles, have become an important, if not indispensible, means of transport in many people's daily lives and work. According to the Statistics of Transportation and Communications issued by the Ministry of Transportation and Communications of Taiwan in February, 2010, the number of registered motorcycles in Taiwan has reached 14.55 million, which signifies a market size not to be underestimated. Therefore, in order to increase sales as well as market share, motorcycle manufacturers have spared no effort in the research and development of motorcycle parts. Aside from the physical appearance of motorcycles, improvements have also been made, for example, to the various motorcycle lamps to provide esthetically pleasing, high-performance, and safe motorcycle products.

In motorcycle lighting, the headlamp of a motorcycle is an essential part that projects light to the ground in front of the motorcycle, so as for the motorcycle driver (hereinafter also referred to as the user) to have a clear view of the road ahead at night. Not only that, the headlamp allows the drivers of vehicles coming in the opposite direction to see where the motorcycle driver is, thus preventing accidents and effectively increasing the motorcycle driver's safety. However, the headlamp is very likely to be angularly shifted by vibrations that occur when the motorcycle runs on a bumpy road. In particular, the vibrations may cause the lighting angle of the headlamp to deviate from the design angle, such that the area illuminated by the headlamp fails to meet the user's needs. Document JP8268360 A, which is seen as the closest prior art, discloses a headlight tilting device for a scooter type vehicle with luggage space having a cover above the headlight, wherein the deadlight tilting device has an operation shaft with the operation part thereof projected into the luggage space to make the aiming adjustment of the headlight.

Should the headlamp be angularly shifted, the lighting angle of the headlamp must be adjusted to the correct angle with a tool. According to currently applicable standards, the lighting angle of a headlamp must be adjusted within an angular error of three degrees, and when a headlamp sheds light on a wall ten meters away from the headlamp, the distance between the center of the illuminated area on the wall and the ground must be 0.6 to 0.8 times the distance between the center of the headlamp and the ground. It can be known from the above that strict regulations apply when it comes to the lighting of a motorcycle headlamp. Therefore, the designs of the headlamp adjustment mechanism and related devices are crucial to motorcycles.

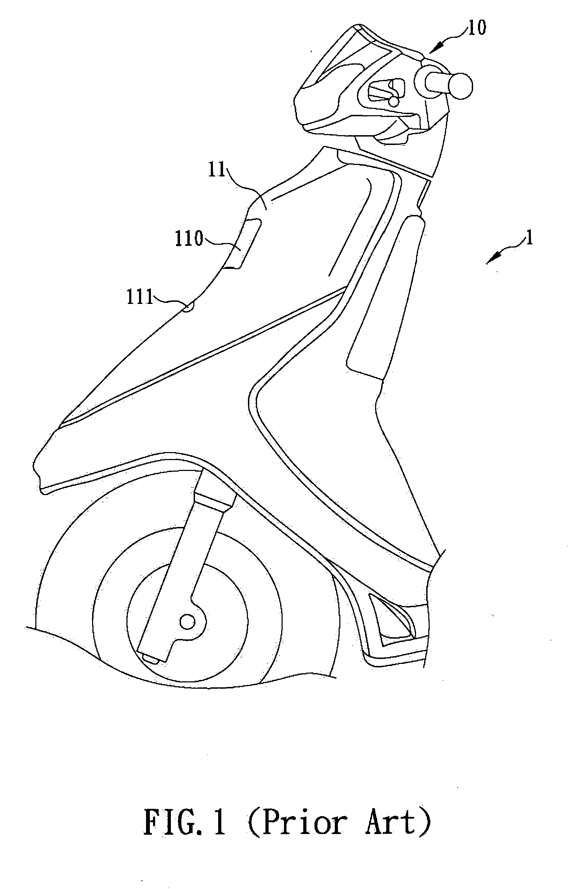

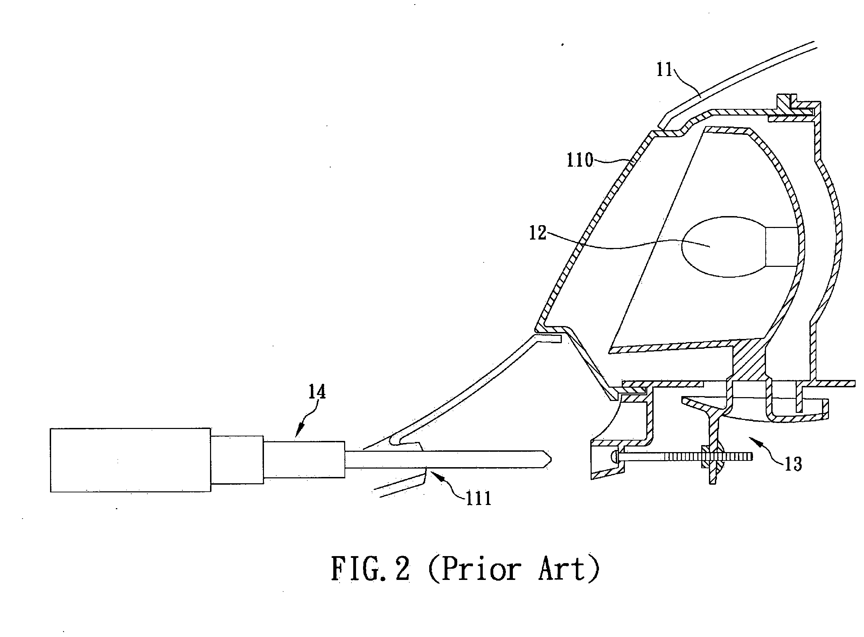

FIG. 1 shows a common motorcycle 1 of today. The face panel 11 of the motorcycle 1 is provided below the handles 10 and has a light-permeable portion 110. As shown in FIG. 2, a headlamp 12 is provided in the light-permeable portion 110. The light projected from the headlamp 12 passes through the light-permeable portion 110 and is cast forward of the motorcycle 1. The headlamp 12 is mounted on a lamp seat, which in turn is connected to an adjustment mechanism 13. The lighting angle of the headlamp 12 can be adjusted by adjusting the adjustment mechanism 13, so that the lighting of the headlamp 12 complies with the foregoing standards and ensures driving safety. As shown in FIGS. 1 and 2, an adjustment hole 111 is located below and adjacent to the light-permeable portion 110, penetrates the face panel 11, and is exposed on the face panel 11. The user (or a service mechanic) may insert a tool 14 into the adjustment hole 111 to adjust the adjustment mechanism 13, thereby bringing the lighting angle of the headlamp 12 to the appropriate angle. Nevertheless, the adjustment hole 111, which is exposed on the face panel 11 as shown in FIG. 1, impairs the styling integrity of the motorcycle 1 and compromises the motorcycle 1 esthetically, which is highly undesirable.

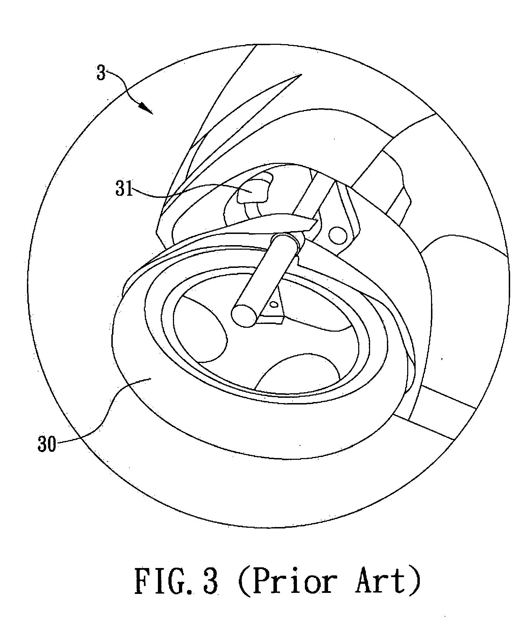

As an alternative to the foregoing design, which requires the adjustment hole on the face panel, the adjustment mechanism can be provided near the front wheel 30 of a motorcycle 3 as shown in FIG. 3, and in this case, the user must open a bottom cover 31 from below the motorcycle 3 in order to adjust the angle of the headlamp with a tool. However, not only is the adjustment mechanism in this design more complex, but also the motorcycle 3 must be laid down or lifted so that adjustment can be made from the underside of the motorcycle 3. The adjusting process is therefore time-consuming and rather inconvenient. Further, since the bottom cover 31 is blocked by the front wheel 30, which prevents almost all light from entering the vicinity of the bottom cover 31, the lack of light makes it difficult to clearly see the conditions around the bottom cover 31 during the adjusting process and thus hinders adjustment of the adjustment mechanism. Consequently, the efficiency and convenience of operation leave much to be desired.

The issue to be addressed by the present invention is to overcome the drawbacks of the conventional approach to headlamp adjustment and, under the condition of not making significant alterations to the conventional hardware construction, design a cover structure capable not only of covering the adjustment hole to prevent it from compromising the styling integrity of a motorcycle, but also of ensuring the efficiency and convenience of headlamp adjustment.

### BRIEF SUMMARY OF THE INVENTION

In view of the aforesaid problems of the conventional approach to headlamp adjustment, the inventor of the present invention conducted extensive research and experiment and finally succeeded in developing a cover structure for a motorcycle headlamp as disclosed herein. The disclosed cover structure, on one hand, allows the lighting angle of a motorcycle headlamp to be rapidly adjusted through an adjustment hole and, on the other hand, effectively prevents the adjustment hole from impairing the styling of the motorcycle.

It is an object of the present invention to provide a cover structure for a motorcycle headlamp. The cover structure includes a face panel and a decorative panel. The face panel is laid over a headlamp of a motorcycle, wherein the headlamp is connected to an adjustment mechanism. The face panel is formed with at least one adjustment hole corresponding in position to the adjustment mechanism. The decorative panel is laid over the face panel to cover the at least one adjustment hole. With the decorative panel covering the at least one adjustment hole on the face panel, the styling integrity of the motorcycle will not be impaired by the at least one adjustment hole. Moreover, the user only has to remove the decorative panel, and headlamp adjustment can be made with a tool inserted in the at least one adjustment hole. Once the adjustment is done, the decorative panel can be rapidly put back in place on the face panel. Thus, the efficiency of the adjusting process is ensured.

It is another object of the present invention to provide the foregoing cover structure, wherein the face panel is formed with a first fastening hole, and the decorative panel is formed with a second fastening hole corresponding in position to the first fastening hole. A fastener can pass sequentially through and be fastened in the second fastening hole and the first fastening hole to connect the decorative panel and the face panel securely together.

It is another object of the present invention to provide the foregoing cover structure, wherein the fastener is a screw to be fastened in the second fastening hole and the first fastening hole to connect the decorative panel and the face panel together. Thus, the decorative panel can be taken off by removing the fastener, so as for the user to adjust the lighting angle of the headlamp.

Yet another object of the present invention is to provide the foregoing cover structure, wherein the face panel is provided with a light-permeable portion corresponding in position to the headlamp. The light emitted by the headlamp can pass through the light-permeable portion and be projected forward of the motorcycle, allowing the user to see the road ahead under the light of the headlamp.

Still another object of the present invention is to provide the foregoing cover structure, wherein the decorative panel is protrudingly provided with a projection corresponding in position to each adjustment hole, and each projection can be inserted into the corresponding adjustment hole. In addition, the side of the face panel that faces away from the decorative panel is extended with an extension adjacent to each adjustment hole. Each extension has a portion which faces away from the face panel and which is fixedly provided with a resilient washer. Each projection can press tightly against the corresponding resilient washer. With each projection fitted tightly in the corresponding resilient washer, the connection between the decorative panel and the face panel is strengthened.

### BRIEF DESCRIPTION OF THE SEVERAL VIEWS OF THE DRAWINGS

The structure as well as a preferred mode of use, further objects, and advantages of the present invention will be best understood by referring to the following detailed description of some illustrative embodiments in conjunction with the accompanying drawings, in which:

FIG. 1 is a partial side view of a conventional motorcycle;

FIG. 2 is a partial sectional view of a conventional motorcycle;

FIG. 3 is a partial enlarged view of a conventional motorcycle;

FIG. 4 is a partially exploded perspective view of a preferred embodiment of the present invention; and

FIG. 5 is an exploded side view and a partial sectional view of a preferred embodiment of the present invention.

### DETAILED DESCRIPTION OF THE INVENTION

The inventor of the present invention has long been engaged in the research, development, and manufacture of motorcycle-related products. In the process, the inventor has found that the conventional headlamp adjustment hole tends to compromise the styling integrity of a motorcycle, which is esthetically undesirable. Besides, where the headlamp adjustment mechanism is provided adjacent to the front wheel of a motorcycle, adjustment cannot be made unless the motorcycle is laid down or lifted, which is both time-consuming and inconvenient. While most manufacturers try to solve the aforesaid problems by improving the motorcycle structure, a proper solution has yet to be found. In consideration of this, the inventor came up with the idea of covering the adjustment hole with a decorative panel so that, without the motorcycle structure being significantly modified, the esthetic problem caused by the conventional exposed adjustment hole is eliminated.

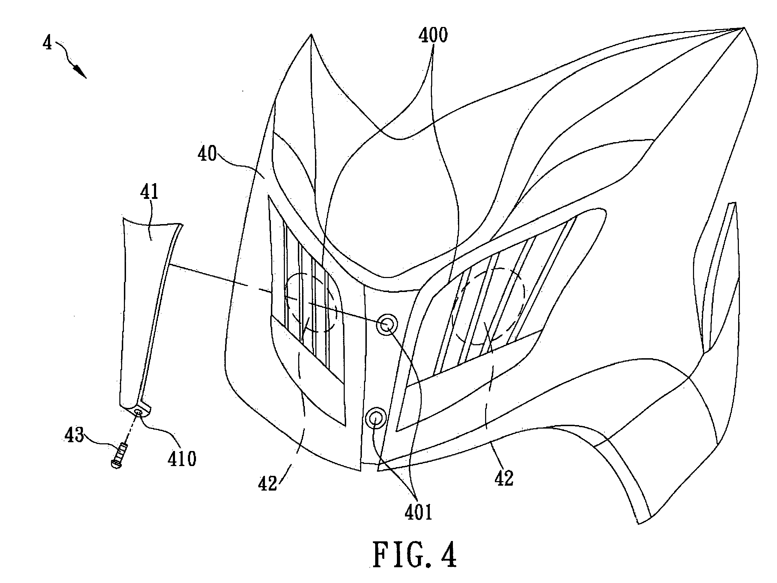

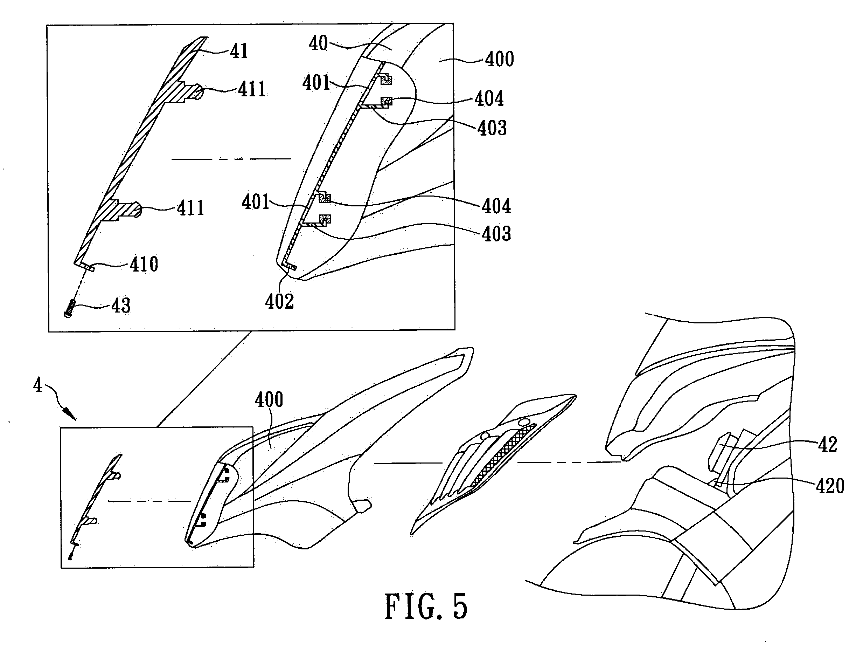

The present invention discloses a cover structure for a motorcycle headlamp. In a preferred embodiment of the present invention as shown in FIGS. 4 and 5, the cover structure 4 includes a face panel 40 and a decorative panel 41. Provided below the face panel 40 is a front wheel (not shown). The face panel 40 is laid over the two headlamps 42 of a motorcycle (with FIG. 5 showing only one of the headlamps 42). In addition, the face panel 40 is provided with a light-permeable portion 400 corresponding in position to each headlamp 42. The light emitted by each headlamp 42 can pass through the corresponding light-permeable portion 400 and be projected forward of the motorcycle. The two headlamps 42 are connected to an adjustment mechanism 420. It should be pointed out that the two headlamps 42 in the present preferred embodiment are provided by way of example only; the number of the headlamps 42 is not limited to two. A manufacturer wishing to design and produce the cover structure 4 according to the present invention may vary the number of the headlamps 42 as needed. For instance, the provision of only one headlamp 42 can satisfy the objects of the present invention just as well.

The face panel 40 is formed with two adjustment holes 401 corresponding in position to both the adjustment mechanism 420 and a position between the two headlamps 42. However, the number of the adjustment holes 401 is by no means limited to two. A manufacturer may increase or decrease the number of the adjustment holes 401 according to product requirements when designing the face panel 40. As the face panel 40 is formed with the adjustment holes 401, the user can insert a tool into the adjustment holes 401 to adjust the adjustment mechanism 420 and thereby adjust the lighting angles of the headlamps 42. In addition, a portion of the face panel 40 that is adjacent to the bottom end of the face panel 40 is bent into an L shape, and this bent portion of the face panel 40 is penetrated by a first fastening hole 402 adjacent to the corner of the L shape. The decorative panel 41 has a symmetric configuration which, in this preferred embodiment, features two-dimensional symmetry with respect to a vertical axis (see FIG. 4). Besides, the bottom end of the decorative panel 41 is bent into an L shape and is penetrated by a second fastening hole 410 adjacent to the corner of the L shape. Referring to FIG. 5, in order to prevent the second fastening hole 410 from compromising the motorcycle esthetically, the second fastening hole 410 is provided at the bottom edge of the decorative panel 41 and corresponds in position to the first fastening hole 402 provided at the bottom edge of the face panel 40. However, the locations of the first fastening hole 402 and of the second fastening hole 410 are not limited to those disclosed herein and may vary as appropriate. Furthermore, the decorative panel 41 is protrudingly provided with one projection 411 corresponding in position to each adjustment hole 401. When the decorative panel 41 is laid over the face panel 40, the projections 411 are inserted into the adjustment holes 401 respectively. On the other hand, the side of the face panel 40 that faces away from the decorative panel 41 is extended with one extension 403 adjacent to each adjustment hole 401, and the portion of each extension 403 that faces away from the face panel 40 is fixedly provided with a resilient washer 404. The projections 411, once respectively inserted in the adjustment holes 401, press respectively and tightly against the resilient washers 404 and are kept by the resilient washers 404 from contact with the inner walls of the adjustment holes 401. With each resilient washer 404 holding the projection 411 fitted tightly therein, the connection between the decorative panel 41 and the face panel 40 is also strengthened. Thus, wear and tear between the projections 411 and the face panel 40 are minimized, and the service life of the face panel 40, extended.

In the state in which the projections 411 are respectively inserted in the adjustment holes 401, the decorative panel 41 covers the adjustment holes 401 but does not cover the light-permeable portions 400. Additionally, the symmetric configuration of the decorative panel 41 corresponds to the headlamps 42 and enhances the look of the cover structure 4. After the decorative panel 41 is mounted on the face panel 40, the user may pass a fastener 43 through the second fastening hole 410 and the first fastening hole 402 sequentially, such that the fastener 43 is fastened in the fastening holes to connect the decorative panel 41 and the face panel 40 securely together. The fastener 43 in this preferred embodiment is implemented by a plastic screw, and yet the present invention imposes no limitations on the form and material of the fastener 43. The structural features of the present invention are such that the decorative panel 41 can cover the adjustment holes 401 and effectively prevent the adjustment holes 401 from being exposed to view. Therefore, the adjustment holes 401 will not compromise the styling of the motorcycle. More importantly, when it is desired to adjust the lighting angles of the headlamps, the motorcycle need not be laid down or lifted to facilitate adjustment of the adjustment mechanism 420 with a tool. The user only has to remove the fastener 43 with a screw driver, and the decorative panel 41 can be taken off, thus allowing the user to insert the tool into the adjustment holes 401 to carry out the desired adjustment. When the adjustment is completed, the decorative panel 41 can be mounted back on the face panel 40 rapidly. As such, the efficiency and convenience of the adjusting process are effectively ensured. Also, due to the structural simplicity of the present invention, it is possible for manufacturers to solve the various problems of the prior art with structural improvements which neither require major changes to the motorcycle structure nor will increase production cost significantly.

While the invention herein disclosed has been described by means of specific embodiments, numerous modifications and variations could be made thereto by those skilled in the art without departing from the scope of the invention set forth in the claims.

## Claims

1. A cover structure (4) for a headlamp (42) of a motorcycle, comprising:
a face panel (40) laid over the headlamp (42) and a decorative panel (41) laid over the face panel (40), wherein the face panel (40) is provided with a light-permeable portion (400) corresponding in position to the headlamp (42) such that light emitted by the headlamp (42) can pass through the light-permeable portion (400) and be projected forward of the motorcycle, the headlamp (42) is connected to an adjustment mechanism (420), the face panel (40) is formed with at least an adjustment hole (401) corresponding in position to the adjustment mechanism (420), and the decorative panel (41) is configured for covering each said adjustment hole (401); and **characterized in that**:
a projection (411) is protrudingly provided at an inner side of the decorative panel (41) corresponding in position to each said adjustment hole (401), such that each said projection (411) is inserted into each said adjustment hole (401) corresponding thereto; and
a first fastening hole (402) is provided at a bottom edge of the face panel (40), and a second fastening hole (410) is provided at a bottom edge of the decorative panel (41) corresponding in position to the first fastening hole (402), such that a fastener (43) can pass sequentially through and be fastened in the second fastening hole (410) and the first fastening hole (402) to connect the decorative panel (41) and the face panel (40) securely together.

2. The cover structure of claim 1, wherein the fastener (43) is a screw.

3. The cover structure of claim 2, wherein the face panel (40) has a side facing away from the decorative panel (41) and extended with an extension (403) adjacent to each said adjustment hole (401), each said extension (403) having a portion which faces away from the face panel (40) and is fixedly provided with a resilient washer (404), each said projection (411) being able to press tightly against a corresponding said resilient washer (404).

4. The cover structure of claim 3, wherein the number of said headlamp (42) is two, and each said adjustment hole (401) formed on the face panel (40) corresponding in position to said adjustment mechanism (420) is locates between the two headlamps (42).

5. The cover structure of claim4, wherein the decorative panel (41) has a symmetric configuration and, when laid over the face panel (40), covers each said adjustment hole (401) without covering the light-permeable portion (400).

## Patentansprüche

1. Verkleidungsstruktur (4) für einen Scheinwerfer (42) eines Motorrades, Folgendes umfassend:
eine Frontplatte (40), die über den Scheinwerfer (42) gelegt ist, und eine Dekorplatte (41), die über die Frontplatte (40) gelegt ist, wobei die Frontplatte (40) mit einem lichtdurchlässigen Abschnitt (400) ausgestattet ist, dessen Position mit der des Schein-werfers (42) derart übereinstimmt, dass vom Scheinwerfer (42) ausgestrahltes Licht durch den lichtdurchlässigen Abschnitt (400) dringen und vor das Motorrad geworfen werden kann, wobei der Scheinwerfer (42) mit einen Justierungsmechanismus (420) verbunden ist, die Frontplatte (40) mit mindestens einer Justierungsöffnung (401) gebildet ist, deren Position mit der des Justierungsmechanismus (420) übereinstimmt, und die Dekorplatte (41) dafür gestaltet ist, jede Justierungsöffnung (401) zu verkleiden, **dadurch gekennzeichnet, dass**:
eine Nase (411) hervorstehend an der Innenseite der Dekorplatte (41) bereitgestellt ist, deren Position derart mit der jeder Justierungsöffnung (401) übereinstimmt, dass jede Nase (411) übereinstimmend mit jeder Justierungsöffnung (401) in diese eingesetzt ist, und
eine erste Befestigungsöffnung (402) an einer Unterkante der Frontplatte (40) bereitgestellt ist und eine zweite Befestigungsöffnung (410) an einer Unterkante der Dekorplatte (41) bereitgestellt ist, deren Position derart mit der der ersten Befestigungsöffnung (402) übereinstimmt, dass ein Befestigungsmittel (43) nacheinander hindurchgleiten und in der zweiten Befestigungsöffnung (410) und der ersten Befestigungsöffnung (402) befestigt werden kann, um die Dekorplatte (41) und die Frontplatte (40) sicher aneinander zu fixieren.

2. Verkleidungsstruktur nach Anspruch 1, wobei das Befestigungsmittel (43) eine Schraube ist.

3. Verkleidungsstruktur nach Anspruch 2, wobei die Frontplatte (40) eine Seite aufweist, die von der Dekorplatte (41) abgewandt ist und angrenzend an jede der Befestigungsöffnungen (401) mit einer Verlängerung (403) verlängert ist, wobei jede Verlängerung (403) einen Abschnitt aufweist, der von der Frontplatte (40) abgewandt und mit einer elastischen Unterlegscheibe (404) fixiert bereitgestellt ist, wobei jede Nase (411) in der Lage ist, sich dicht an eine entsprechende elastische Unterlegscheibe (404) zu pressen.

4. Verkleidungsstruktur nach Anspruch 3, wobei die Anzahl der Scheinwerfer (42) zwei beträgt und jede Justierungsöffnung (401), die in der Frontplatte (40) gebildet ist und deren Position mit der des Justierungsmechanismus (420) übereinstimmt, zwischen den zwei Scheinwerfern (42) angeordnet ist.

5. Verkleidungsstruktur nach Anspruch 4, wobei die Dekorplatte (41) eine symmetrische Gestaltung aufweist und jede Justierungsöffnung (401) verkleidet, ohne den lichtdurchlässigen Abschnitt (400) zu verkleiden, wenn sie über die Frontplatte (40) gelegt ist.

## Revendications

1. Structure de couvercle (4) pour un phare (42) d'une moto, comprenant :
un panneau frontal (40) posé sur le phare (42) et un panneau décoratif (41) posé sur le panneau frontal (40), dans lequel le panneau frontal (40) est pourvu d'une portion perméable à la lumière (400) correspondant en position au phare (42) de sorte que la lumière émise par le phare (42) puisse passer à travers la portion perméable à la lumière (400) et être projetée à l'avant de la moto, le phare (42) est raccordé à un mécanisme d'ajustement (420), le panneau frontal (40) est formé avec au moins un alésage d'ajustement (420) correspondant en position au mécanisme d'ajustement (420), et le panneau décoratif (41) est configuré pour recouvrir chaque dit alésage d'ajustement (401) ; et **caractérisé en ce que** :
une protubérance (411) es prévu en saillie protubérante au niveau d'un côté intérieur du panneau décoratif (41) correspondant en position à chaque dit alésage d'ajustement (401), de sorte que chaque dite protubérance (411) soit insérée dans chaque dit alésage d'ajustement (401) correspondant à celle-ci ; et
un premier alésage de fixation (402) est prévu au niveau d'un bord inférieur du panneau frontal (40), et un second alésage de fixation (410) est prévu au niveau d'un bord inférieur du panneau décoratif (41) correspondant en position au premier alésage de fixation (402), de sorte qu'un élément de fixation (43) puisse passer séquentiellement à travers et être fixé dans le second alésage de fixation (410) et le premier alésage de fixation (402) afin de raccorder le panneau (41) et le panneau frontal (40) l'un à l'autre de manière sécurisée.

2. Structure de couvercle selon la revendication 1, dans lequel l'élément de fixation (43) est une vis.

3. Structure de couvercle selon la revendication 2, dans lequel le panneau frontal (40) possède un côté se détournant du panneau décoratif (41) et prolongé par une extension (403) adjacente à chaque dit alésage d'ajustement (401), chaque dite extension (403) possédant une portion qui se détourne du panneau frontal (40) et est pourvue de manière fixe d'une rondelle résiliente (404), chaque dite protubérance (411) étant en mesure de se presser étroitement contre une rondelle résiliente (404) correspondante.

4. Structure de couvercle selon la revendication 3, dans lequel le nombre desdits phares (42) est deux, et chaque dit alésage d'ajustement (401) formé sur le panneau frontal (40) correspondant en position audit mécanisme d'ajustement (420) est situé entre les deux phares (42).

5. Structure de couvercle selon la revendication 4, dans lequel le panneau décoratif (41) possède une configuration symétrique et, quand il est posé sur le panneau frontal (40), recouvre chaque dit alésage d'ajustement (401) sans couvrir la portion perméable à la lumière (400) -
